# EUROPEAN PATENT APPLICATION

(11) **EP 4 495 636 A1**
(43) Date of publication of application: **22.01.2025**
(21) Application number: 23186930.6
(22) Date of filing: 21.07.2023
(51) Int. Cl.: G01T 1/17, G01T 1/24, H04N 5/32

(54) **PHOTON COUNTING DETECTOR FLICKER NOISE CORRECTION**

(71) Applicant: Koninklijke Philips N.V., 5656 AG Eindhoven (NL)
(72) Inventor: HERRMANN, Christoph, Eindhoven (NL); LIVNE, Amir, Eindhoven (NL); FINZI, David, 5656AG Eindhoven (NL)
(74) Representative: Philips Intellectual Property & Standards

(57) **Abstract**

The invention relates to a device (20) for use in photon-counting image detection, e.g. to correct observed counts. The device comprises an ASIC (32) for connecting to a detector array (30) comprising detector pixels circuits (34) for converting energy of photons into electrical charge packets. The device comprises a processor (50) for processing outputs of the application-specific integrated circuit. The ASIC comprises pixel circuits, each adapted to receive electrical input pulses, in which the pixel circuits are functionally and/or structurally substantially identical. The ASIC comprises a pulser (39) for generating electrical test pulses. The image pixel circuits are connectable to corresponding detector pixels to receive their electrical input pulses and a dummy pixel circuit is connected to the pulse generation circuit (39) to receive its test pulses as input. The processor (50) analyzes the dummy pixel circuit output to determine a measure indicative of a drift, change and/or deviation of at least one parameter . The processor furthermore corrects image pixel circuit outputs and/or adjusts settings of the ASIC by taking the discrepancy measure into account.

## Description

### FIELD OF THE INVENTION

The present invention relates to the field of image detectors, particularly photon counting image detectors, e.g. for use in (e.g.) diagnostic imaging. More specifically, the invention relates to devices, systems, methods and computer-program products for characterizing, reducing and/or compensating flicker noise in signals and/or images (e.g. as derived from such signals) that are acquired by a photon-counting detector.

### BACKGROUND OF THE INVENTION

In X-ray radiation detectors, a sensor element is used to generate an electrical charge when exposed to incident X-ray (and/or gamma) radiation. For example, indirect conversion sensors may typically use a scintillator to convert X-ray radiation impinging on the sensor into a short burst of light, which is then converted to electrical charges, e.g. by means of photodiodes. In a direct conversion sensor, the X-ray photon interacts directly with the sensor material to generate the electrical charge, which allows, in principle, to detect each photon interaction individually, within practical constraints.

Photon counting (PhC) detectors are, generally, radiation detectors suitable for detecting and counting individual photons. For example, such single-photon counting detectors may emit a signal pulse for each photon that is detected, e.g. as opposed to conventional (integrating) photodetectors that output a signal proportional to the total photon flux hitting the radiation-sensitive area (pixel). Counting detectors are commonly used in nuclear medicine, e.g. in positron emission tomography (PET) and single photon emission computed tomography (SPECT), and may offer various advantages for use in 2D X-ray and computed tomography (CT) as well, e.g. for spectral CT imaging and/or dynamic CT imaging. Photon counting detectors generally count photons by comparing an incoming detector signal against an energy threshold, or in the case of spectral imaging, against more than one energy threshold. The performance and achievable output quality of a CT system using PhC detection is strongly dependent on the temporal stability of the sensors and the associated readout electronics.

In a typical detector design, the direct-conversion material is coupled to an application-specific integrated circuit (ASIC) for converting the radiation-induced charge to an electrical signal per pixel. For example, the pixelated detector array (e.g. a CZT crystal) may be directly connected (and physically attached) to the ASIC by flip-chip bonding (without limitation thereto, e.g. interposer structures may also be used). The ASIC (e.g. an array of such ASICs) processes the raw signals (charge packets) originating from the radiation-sensitive element. This processing may implement one or more counting channels, e.g. by using a pulse shaper and/or other analog processing, and may include a step of analog to digital conversion (ADC).

Photon counting detectors are sensitive to flicker noise in the readout circuit implemented on the ASIC, which can affect, over time, the energy threshold levels, in a correlated manner, such that the observed counts (OC), are also affected in a correlated manner across different pixels. Since the observed counts form the (raw) basis for photon flux estimates, and are typically further processed into the images of interest (e.g. CT reconstruction images expressed in Hounsfield Units), this correlated noise can clearly result in undesirable image artefacts in reconstructed CT images (e.g. in tomographic slice images). Additionally, flicker noise may also affect the amplitude of pulses at the output of a pixel's analog front-end (AFE), which may cause incorrect or inaccurate energy discrimination.

Even though recent design optimizations of MOSFETs (metal-oxide-semiconductor field-effect transistors) have aimed to reduce flicker noise caused by the pixel's analog front-end and other shared ASIC structures, the flicker noise still accounts for a significant contribution to instability of the observed counts (OC) over time, in addition to other factors, such as electric field changes in the radiation-sensitive sensor material, e.g. in the direct-conversion material crystal (e.g. CZT).

### SUMMARY OF THE INVENTION

It is an object of embodiments of the present invention to provide a device and method to reduce flicker noise in signals acquired by a photon-counting detector.

The invention proposes to monitor, in pixels on the same ASIC of a photon-counting detector, the evolution over time of energy threshold levels and pulse amplitudes, e.g. due to flicker noise. Electrical test pulses can be injected directly into the analog frond-end of a (dummy) pixel circuit on the ASIC, e.g. instead of the raw sensor pulses caused by the conversion of radiation into electric charges (e.g. by photon interaction in a CZT crystal). Due to the correlated nature of flicker noise, electrical test pulses with known properties, e.g. a known amplitude, can be used to estimate threshold and amplitude changes in other pixel circuits of the same ASIC, i.e. image pixels that receive actual sensor input.

It is an advantage of embodiments of the present invention that a good stability of outputs, e.g. of observed counts (OC), of a photon counting detector can be achieved and/or that correlations between errors in the outputs pertaining to different detector pixels (read out by the same ASIC) due to flicker noise can be reduced. Counting energy threshold levels can be more accurately and/or robustly tuned, enabling better photon energy discrimination and reducing image artefacts due to spatially (or spatiotemporally) correlated noise.

The present invention can be applied to different detector designs, e.g. regardless of the specific radiation-sensitive material and/or the specific design of the analog front-end circuit and can also be used for photon counting detectors for gamma radiation. Even though reference is made primarily to direct-conversion PhC detectors throughout the present description, it will be understood that the same approach may be applicable to photon counting detectors based on indirect detection as well (e.g. using an intermediate scintillator and e.g. photodiode structure).

It is an advantage of embodiments of the present invention that test signals with known properties (e.g. a known amplitude) can conveniently be used for calibration and/or testing purposes, e.g. without requiring elaborate testing and/or calibration setups, extensive equipment and/or complex procedures.

The invention is implemented by a device, system, method, and computer program product as recited in the claims.

The ASIC may be adapted to avoid signal input from the detector array to the dummy pixel circuits, e.g. by electrically isolating prefabricated electrical connection(s) of the dummy pixel(s) to the detector array (such that the pixel array may be manufactured as a uniform set of pixels, e.g. except for providing passivation over the dummy pixel's connection pads), by physical lack of detector pixels, when installed, at the input nodes of the dummy pixel(s) (e.g. the detector array not extending over the area occupied by the dummy pixel, e.g. in a last row of the ASIC pixel matrix), by designing the pixels of the ASIC such that the dummy pixels are identical to image pixels except for a lack of an input connection to the detector array, etc.

The output of the at least one dummy pixel in response to the plurality of electrical test pulses is analyzed to determine a measure indicative of a drift, change and/or deviation of at least one parameter of the ASIC and/or detector.

The measure is used to correct outputs of (e.g. the threshold detectors) of the other image pixel circuits, and/or to adjust a setting of the application-specific circuit, e.g. to adjust a setting of the at least one threshold value (of the threshold detectors) of said image pixel circuits, by taking the determined measure into account, e.g. to perform a correction of counts (CoC) to the measured image pixels' signals.

In the sequel, the term "image pixel" is also used to refer to an "image pixel circuit".

Particularly, the measure may relate to a change in a correspondence between the threshold level and the input pulse amplitude at which the threshold is exceeded due to electronic noise, e.g. flicker noise. Particularly, electronic noise, e.g. flicker noise, may cause the effectively applied threshold (e.g. by a comparator of the threshold detector) to differ from its nominal setting, and/or may shift the actual input received by such comparator to differ from the input it should receive in the absence of such noise (i.e. the actual input signal or the signal derived therefrom as intended). This noise, or at least the component thereof that the present invention is primarily concerned with, is correlated across pixels on the same ASIC, i.e. applies to the image pixels as well as the dummy pixel(s), and typically can be characterized as a slow drift, e.g. a low-frequency change in the correspondence (drift of the effective threshold and/or amplitude of the signal that is being compared against the threshold).

The independent and dependent claims describe specific and preferred features of the invention. Features of the dependent claims can be combined with features of the independent claims and with features of other dependent claims as deemed appropriate, and not necessarily only as explicitly stated in the claims.

### BRIEF DESCRIPTION OF THE DRAWINGS

FIG. 1 shows an illustrative CT imaging system in accordance with embodiments of the present invention.
FIG. 2a and FIG. 2b show a device in accordance with embodiments of the present invention.
FIG. 3 shows an illustrative pixel matrix layout of an ASIC in a device in accordance with embodiments of the present invention.
FIG. 4 shows an amplitude sweep, relative to a fixed threshold level, to illustrate embodiments of the present invention.
FIG. 5 shows a curve of a dummy pixel's output (observed counts) as function of the pulse amplitude in an amplitude sweep as schematically shown in FIG. 4, to illustrate embodiments of the present invention.
FIG. 6 shows a threshold scan, in which different threshold levels are tested using a sequence of substantially identical (i.e. constant amplitude) pulses, to illustrate embodiments of the present invention.
FIG. 7 shows a curve of a dummy pixel's output (observed counts) as function of the threshold level in a threshold scan as schematically shown in FIG. 6, to illustrate embodiments of the present invention.
FIG. 8 shows illustrative experimental data obtained from a detector array, in accordance with embodiments of the present invention, showing: image pixel outputs (observed counts; averaged over a set of pixels) over time during a (blank) image acquisition, a filtered (smoothed) version of the aforementioned, and the concurrently acquired output from dummy pixels (averaged over a set of dummy pixels and likewise smoothed).
FIG. 9 shows illustrative experimental data obtained from image pixels, i.e. observed counts averaged over a plurality of pixels, as function of time (index); during different blank image acquisitions (shown in different grey hues).
FIG. 10 shows the observed counts for the illustrative example of FIG. 9 after applying a correction based on dummy pixel outputs simultaneously acquired with the image pixels' acquisition, to illustrate the effectiveness of correction methods in accordance with embodiments of the present invention.
FIG. 11 illustrates a method in accordance with embodiments of the present invention. The drawings are schematic and not limiting. Elements in the drawings are not necessarily represented on scale. The present invention is not necessarily limited to the specific embodiments of the present invention as shown in the drawings.

### DETAILED DESCRIPTION OF EMBODIMENTS

The present invention relates to an application-specific integrated circuit (ASIC) suitable for use in image detection based on (e.g. X-ray and/or gamma) photon counting, such as in a (photon-counting, e.g. spectral photon-counting) computed tomography (CT) scanner.

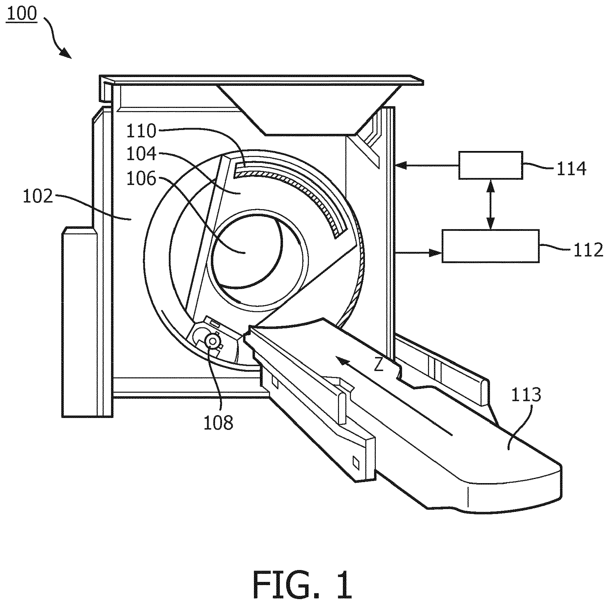

An illustrative diagnostic imaging system in accordance with embodiments of the third aspect of the present invention is shown in FIG. 1, which comprises a photon-counting detector 110 used in a computer tomography (CT) system. Alternatively the imaging system may be a conventional projection imaging system, e.g. a direct radiography system or a mammography system. The imaging system is not necessarily limited to projection radiography, e.g. embodiments of the present invention may also relate to, or may be applied in, nuclear medicine, e.g. SPECT or PET imaging, or non-medical fields, e.g. non-destructive testing, security screening by radiography, etc. For example, the radiation detector assemblies and related methods in accordance with embodiments, as discussed hereinbelow, may also be implemented in (or in conjunction with) a PET or SPECT radiation detector assembly, a gamma camera head, or another single photon (or photon-counting) image detector. Nonetheless, it will be understood that embodiments of the present invention may be particularly advantageous when applied to CT imaging detectors, and particularly for applications such as spectral CT, e.g. Spectral Photon Counting Computed Tomography (SPCCT).

Referring to FIG. 1, a diagnostic imaging system 100 in accordance with embodiments of the present invention comprises a radiation source 108, and a radiation image detector 110, i.e. a photon-counting image detector in accordance with embodiments of the present invention (see further hereinbelow). The imaging system 100 may comprise a generally stationary gantry 102 and a rotating (rotatable) gantry 104. The rotating gantry 104 may be rotatably supported by the stationary gantry 102 and may (in use of the system) rotate around an examination region 106, about a longitudinal axis Z. The radiation source 108 and the radiation image detector 110 may be held by the gantry at opposite positions with respect to each other across the examination region 106, such that the radiation source 108 can project X-ray radiation through the examination region 106 so as to impinge on the radiation image detector.

The radiation source 108, such as an X-ray tube, may be rotatably supported by the rotating gantry 104, e.g. such as to rotate with this rotating gantry, and may be adapted for emitting X-ray radiation that traverses the examination region 106.

The radiation image detector 110 may comprise a radiation-sensitive detector array that subtends an angular arc opposite the radiation source 108 across the examination region 106. The image detector 110 may include one or more rows of detector elements arranged with respect to each other along the Z-axis direction. The image detector 110 may be adapted for detecting radiation traversing the examination region 106, and generating signals indicative thereof, e.g. indicative of the intensity of received radiation or of the individual photons for different locations on the array.

The system may comprise a subject support 113, such as movable a couch, for supporting an object or subject in the examination region.

The CT system may comprise a reconstructor 112 for reconstructing the signals provided by the image detector 110. The reconstructor may be adapted to generate reconstructed tomographic images, e.g. showing transverse slices. The system may also comprise an operator console 114 for controlling or monitoring the system 100 and/or for providing a user interface to an operator.

The device in accordance with embodiments of this first aspect of the present invention comprises the integrated circuit (ASIC) and (a) processor(s) and/or controller(s), e.g. to process signals and/or other output(s) of the ASIC, e.g. to determine image data therefrom, such as to determine an image commensurate with a pixel layout of the detector, and/or to control operation of the ASIC. For example, the processor may be adapted to generate an image representative of photon flux to which the detector array module was exposed and/or one or more spectral images (e.g. pertaining to specific energy bins for the radiation impinging on the detector). The image data is not necessarily limited to such direct representations of the radiation that impinges on the detector, e.g. may also relate to a tomographic reconstruction and/or other image data derived from the raw detector signals.

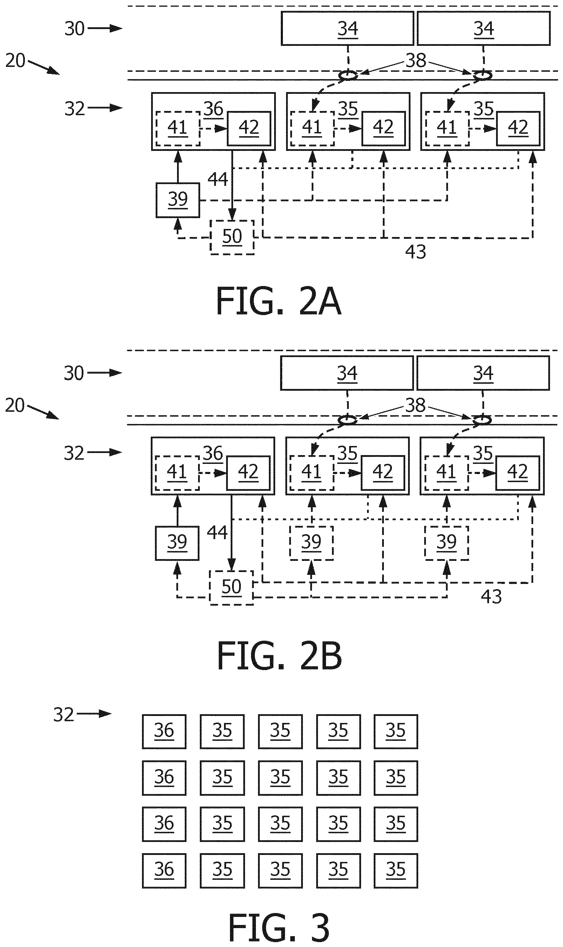

Referring to FIG. 2a and Fig. 2b, an illustrative device 20, e.g. a radiation detector assembly, in accordance with embodiments of the present invention is schematically shown. The device 20 comprises an application-specific integrated circuit 32. The ASIC 32 is adapted for operably connecting to, and/or is operably connected to, a detector array module 30 for converting photons into electrical detection pulses, e.g. for providing (an) electrical output signal(s) representative of radiation-matter interactions in the radiation-sensitive material of the detector array module in a spatially resolved manner, i.e. such that image information is obtained and/or can be inferred from the electrical output signal(s). For PhC, the detector array module may generate a single electrical output signal (e.g. pulse) in response to an interaction of a single photon with the detector array module, i.e. such as to allow photon counting and/or energy detection of the (i.e. each) photon.

The device 20 may also comprise this detector array module 30, e.g. the ASIC 32 may be operatively connected to the detector array module 30. For example (without limitation thereto), the ASIC 32 may be flip-chip bonded to the detector array module 30, e.g. as schematically illustrated in FIG. 2 by structural and/or electrically conductive connection points, e.g. solder balls.

The detector array module 30 comprises a plurality, e.g. an array, of detector pixels 34. The detector pixels may be composed of a suitable direct conversion material such as a CdTe-ZnTe alloy system (e.g. CZT) for converting photons into electrical charge packets (causing detectable electrical pulses). The detector array module may be pixelated into a plurality of pixels, e.g. forming a matrix having rows and columns. Each detector pixel 34 may typically include a cathode and anode to define the volume over which the pixel collects radiation-induced electrical charges from the direct-conversion material, and to route the collected charges to the ASIC board via interconnections between the ASIC and the module.

The ASIC interfaces with the radiation-sensitive detector pixels by direct (or at least, by preferably short and low-resistance) electrical connections between detector pixels 34, and an input part of the ASIC, e.g. input nodes of corresponding ASIC image pixels 35 to process the raw analog signals (collected charge packets) representative of radiation interactions in radiation-sensitive volumes of the detector module (i.e. within the physical extent of each detector pixel). For example, in a flip-chip arrangement, charges may transfer substantially directly from the detector pixel 34 to a corresponding ASIC image pixel 35, e.g. via the bonding connections 38.

The ASIC receives raw electrical input from the radiation-sensitive element (e.g. for each detector pixel 34) and produce output(s) to characterize and/or quantify the input (e.g. again, for each corresponding pixel). The image pixels 35 of the ASIC may implement generally known functions to generate the output(s) based on the raw analog input, e.g. amplification, pulse shaping, pulse counting, integration, thresholding, filtering, digitization and/or other such functions for conditioning the raw electrical signal, e.g. electrical charge, into (a) usable signal(s). It will be understood that not all processing operations for obtaining an image from the raw input pulses from the detector array are necessarily implemented by the ASIC, e.g. the ASIC may primarily provide the lowest levels of processing functions, e.g. amplification (if needed/implemented), pulse shaping, threshold detection (e.g. analog-to-digital conversion of the pulse amplitude) and/or counting. Higher level functions may be implemented on the ASIC, implemented in part on the ASIC, or delegated entirely to (a) further processing system(s), which is (are), for the sake of simplicity, referred to as the processor (and/or controller) 50 and/or (e.g. equivalently) processes of the Image Chain (IC) discussed further hereinbelow.

The ASIC 32 comprises a plurality of image pixels 35 connected to, or adapted for connecting to, a corresponding plurality of detector pixels 34 of one or more detector array modules 30. Thus, the plurality of image pixels 35 of the integrated circuit may be operably connected to determine radiation received by a corresponding plurality of radiation-sensitive volumes (e.g. CZT pixels) in the radiation-sensitive detector array module(s) 30. The image pixels 35 may form a one-dimensional or two-dimensional array of pixels.

Each detector pixel 34 may be, in use, connected to a corresponding signal processing circuit, i.e. implemented by the image pixel 35, adapted to digitize the electrical pulses (charge packets) generated in the radiation-sensitive material. The image pixel may comprise a pulse shaper and/or other analog processing circuitry 41 to shape (and/or amplify) the detector pixel's raw pulse into a clean and/or more representative pulse, e.g. a more Gaussian-like shape with a predetermined width (e.g. the pulse shaper being adapted to standardize, as best as possible, the shape and full width at half maximum, FWHM). The conditioned pulse may typically have a height that is at least approximately proportional to the photon energy of the X-ray photon that has generated the electrical pulse in the detector pixel.

The pulse, e.g. after being shaped by the pulse shaper 41, may be fed to a threshold detector 42, e.g. comprising one or more comparators. A plurality of comparators, with different threshold levels, may be used for detecting/counting in multiple energy bins, e.g. for photon energy discrimination and/or spectral imaging. The threshold detector may also be configured as a simple analog to digital converter (ADC), e.g. by generating a quantized (i.e. digital) output representative of the pulse amplitude (e.g. a 1-bit output for simple, single-threshold detection in case of photon counting without energy discrimination, and/or multiple bits to allow different energy bins to be identified with different digital multi-bit values).

By configuring the comparators of all image pixels in the same manner (e.g. implementing the same thresholds), within tolerances, a homogenous image response can be achieved. Alternatively, the thresholds (comparator levels) may be configurable per pixel for calibrating the individual pixel circuits.

The device 20 also comprises a processor 50 for processing the output(s) of the integrated circuit, as indicated by arrow(s) 44. The processor may be integrated in the ASIC 32, external thereto, or a combination of both. The processor 50 may also be adapted to control functions of the ASIC, e.g. to control pulse sequences generated for a dummy pixel (discussed hereinbelow), to adjust threshold trimming levels of image and/or dummy pixels, and so forth, as indicated by arrows 43.

Furthermore, the integrated circuit comprises at least one dummy pixel 36, e.g. which may have the same or similar structure as the aforementioned image pixels. The dummy pixel(s) is not connected to the radiation-sensitive detector array module 30. Either there is no bonding connection 38, or if it is there, it is not being used.. Instead, the dummy pixel receives raw input from a pulser circuit 39 (e.g. a pulser circuit is controlled so as to act as the dummy pixel's AFE input).

Fig. 2a shows a single pulser circuit commonly shared by the dummy pixel(s), and optionally shared with regular image pixels for calibration purposes. Fig. 2b shows that each dummy pixel (and, optionally, each image pixel) has its own pulser circuit 39. Of course any solution in between these is also possible, i.e., a limited number of shared pulser circuits. Having independent pulser circuits enables the processor to configure the pulser circuits individually and/or in parallel.

The dummy pixel 36 may comprise an analog front-end (AFE) circuit adapted to receive an input from the pulser circuit 39. The image pixels 35 may comprise an analog front-end circuit of similar or same structure. Optionally, the front-end circuits of the image pixels 35 may be adapted to receive an input from the pulser circuit 39, to enable calibration of the individual image pixels using the pulser circuit.

In one embodiment, the at least one dummy pixel is implemented outside the matrix of image pixels. Obviously, the dummy pixel(s) may also be within the area covered by the detector area module (and, thus, by one or more detector pixels), but configured so as to lack an electrical connection thereto. This advantageously allows the dummy pixel(s) to be implemented by substantially the same design and components as the image pixels, e.g. with only minor adaptation in order to provide the different functionality of the dummy pixel. FIG. 3 shows an example of a pixel matrix layout, in which dummy pixels occupy a first column of the matrix. Embodiments are not necessarily limited to this example, e.g. the first row, last row, first column, last column and/or any combination thereof may be used for the dummy pixels. The dummy pixels are not necessarily limited to a single first and/or last row and/or column, e.g. the first (and/or last) 2, 3, .. rows and/or columns may be used for dummy pixels, even though it will be understood that the number of rows and/or columns assigned to dummy pixels are preferably kept low, e.g. less than 10% of the total number of pixels, preferably less than 5%, e.g. about 1% or even less. It is also noted that an entire row and/or column does not necessarily have to be filled with dummy pixels, e.g. only one or a few pixels of a row and/or column may be sufficient for use as dummy pixels.

Detector pixels connected to the dummy pixels may alternatively be rendered inactive, e.g. by shielding a part of the detector array such that no photons can reach the radiation-sensitive material of detector pixels connected to dummy pixels. It will be understood that such approach may not be ideal, but easy to implement.

By locating the dummy pixel(s) outside the matrix of image pixels but within the same ASIC, any structural differences between of the dummy pixel and an image pixel can be kept minimal, without interfering with the normal operation of the detector, e.g. allowing the central field of image pixels to acquire data for each pixel location in the image pixel grid. By limiting the structural differences, flicker noise effects in the dummy pixel will be substantially similar or identical to those in an image pixel, such that a characterization of flicker noise determined via the dummy pixel can be assumed to be representative for flicker noise experienced by actual image pixels on the same ASIC.

The integrated circuit comprises a pulser circuit 39, adapted to generate a plurality of predetermined electrical charge pulses, e.g. with each pulse corresponding to a fixed and/or configurable amount of electrical charge (e.g., in general, a known and preferably accurately controllable charge). A pulser circuit 39 may be comprised in each dummy pixel, or each dummy pixel may be connected to one or more common pulser circuits external to the dummy pixel.

The pulser circuit 39 is configured to inject electrical pulses into the signal processing circuitry of the dummy pixel 36. A similar or the same pulser circuit may also be provided to inject such electrical pulses into a regular image pixel 35, e.g. for calibration purposes (in combination with switching means to select between the pulser and the detector pixel input) using configurable signal routing elements. For the sake of simplicity, FIG.2 shows only a single pulser 39, but it will be understood that this circuit may also be duplicated for each pixel, and integrated therein.

The (e.g. each) electrical pulse generated by the pulser simulates an electrical detection of a photon interaction event, e.g. as would be received from the detector array by a regular image pixel.

The pulses may be provided at a predetermined frequency, e.g. a pulse frequency that is fixed or configurable, or, equivalently, the time between subsequent pulses may be fixed or configurable, e.g. such that the pulse timing is known and/or accurately controlled. For example, the pulser 39 may generate charge pulses at a rate of 1 MHz, e.g. in the range of 100 kHz to 10 MHz, e.g. in the range of 500 kHz to 2 MHz.

The pulser circuit may be used to perform a threshold scan and/or an input pulse amplitude sweep, in which the output(s), such as counting values of events passing a threshold (or counting values for multiple thresholds, e.g. when multiple counting channels/energy bins are implemented), of the dummy pixel is (are) observed, e.g. via an output connection to the processor 50, while the dummy pixel receives the generated pulses from the pulser circuit as its input.
The processor 50 may be adapted to control the pulser circuit 39, e.g. so as to activate the pulse sequence, to control properties of the pulses, e.g. the pulse frequency and/or amplitude.

In a particularly simple embodiment, the pulser circuit generates pulses of a fixed amplitude at a fixed frequency while the device is active. In more complex embodiments, the pulse train generated by the pulser circuit may cycle through different pulse amplitudes. This cycle may be preconfigured and fixed in the hardware design, such that no active control is required. Alternatively, it may be nonetheless convenient to control the pulser circuit by the processor.

The pulser circuit may comprise a chopped current source, or switched capacitor, a combination thereof, or other suitable means.

The pulser circuit may comprise a chopped current source, e.g. such that an electrical current having a predetermined and known electrical current value is, upon activation (e.g. by the switching means, e.g. at the predetermined frequency), injected into the input node of the dummy pixel's analog front-end.

The pulser circuit may comprise a switched voltage source, e.g. the pulser circuit may be adapted to receive, or to generate, a predetermined voltage, and this voltage may, in operation, be used to charge a capacitor, such that the charge accumulated by the capacitor can be injected into the dummy pixel's input node.

It may be particularly advantageous to use such arrangement in the pulser circuit that relies on a switched voltage source to charge a capacitor, e.g. such that the current generated by the stored charge in the capacitor is injected into the input of the dummy pixel (e.g. the AFE, e.g. into a preamplifier and/or pulse shaper). The supplied voltage, received to charge the capacitor, is generally not (substantially) sensitive to flicker noise, whereas a switched current source may result in current pulses that are affected by flicker noise. Since the pulses are used to gauge flicker noise effects, it may be important to provide input pulses to the dummy pixel that are robust, accurate and reproducible. For example, a switched current source may typically rely on an implementation that uses one or more MOSFET elements, i.e. notably sensitive to flicker noise. By controlling the specific amount of charge that is injected in a pulse into the dummy pixel by using a capacitor, the exact capacitance value of the capacitor is the dominant (or, substantially, only) source of uncertainty. The uncertainty on the capacitance value is, however, less problematic. The uncertainty of the capacitance value, e.g. due to CMOS manufacturing process variations, relative to its design specification, can be determined within a margin of uncertainty of about 10% or less, and, importantly, the capacitance value will remain substantially constant over time, i.e. will not drift significantly over time.

Furthermore, a calibration of the capacitance value (or, more generally, of the charges generated by the pulser) may be performed, e.g. after manufacturing the device. Specifically, if at least one image pixel, e.g. each of the pixels (dummy and image pixels), includes the same (or substantially similar) pulser structure as used for the dummy pixels, a reference X-ray energy may be used in a calibration. Such reference energy may be obtained by shielding the image pixel(s) with e.g. a lead (Pb) filter in a reference X-ray beam, and tuning the pixel's response to the filter's (here Pb) K-edge energy, e.g. 88 keV. It will be understood that this is only an illustrative example, and other filters or means for generating an accurately known photon energy can be used. A threshold level of the image pixel (e.g. of at least one comparator of the threshold detector 42 of the pixel) can be adjusted, e.g. as would be an approach to calibrate the device, e.g. for homogeneous and quantitative image response, to the reference energy level (88 keV in this example).

The pulser circuit of this image pixel may be controlled so as to achieve the same, or substantially the same, output. For example, after reading out the output of the image pixel, e.g. a value generated by the threshold detector 42, the pulser circuit may be connected to the input of the same image pixel (and the connection to the detector pixel is switched off, and/or exposure of the detector pixel to photons of the reference energy is disengaged) and the pulser configuration may be tuned (e.g. adjusting the input voltage supplied to the capacitor) to produce the same output of the image pixel (e.g. substantially the same value). With this configuration of the pulser, the equivalent of the reference energy level is obtained. Since (structurally) the same pulser circuit is used for both the dummy pixel and the image pixel, e.g. routed from the same capacitor on the ASIC chip or provided by an identical pulser circuit, any variation between the capacitance used to determine the reference setting of the pulser by means of the image pixel and the capacitance used to generate test electrical pulses for the dummy pixel is obviously avoided altogether, i.e. the same control setting of the pulser of the dummy pixel can be applied as was found for the pulser circuit of the image pixel in correspondence to the actual photon interaction events to achieve substantially the same simulated photon energy. If each pixel has its own dedicated pulser circuit integrated therein, it can still be reasonably assumed that variation between different capacitances on the same ASIC is minimal (e.g. this variation is small for ASIC components on the same wafer). Thus, the calibrated setting of the pulser (selecting the amplitude of the test electrical current pulse) can be used for the dummy pixel to produce a reference test pulse corresponding to the calibrated reference energy (e.g. 88 keV).

For example, an operator may select, e.g. via a user interface of a console or controlling system of the detector, to perform a calibration. This may be performed with the detector assembled in the system for its intended use, e.g. a CT system, but may alternatively be performed in a dedicated calibration setup, e.g. in/after the manufacturing process. In the former use case, the radiation incident on the detector array module may be provided by the X-ray tube intended for use in imaging by the system. To achieve a well-defined reference spectrum, a K-edge filter or other spectral filter with known characteristics may be placed in the beam, e.g. inserted between the radiation-sensitive side of the detector array module and the X-ray tube. The filter allows to obtain photons with a known and robust predetermined photon energy, i.e. the actual X-ray photon energy is precisely known by relying on the specific K-edge of the filter material, and the ASIC image pixel output may be observed in response thereto. For example, for each image pixel, a detector pixel output value (e.g. the ADC-quantized, filtered and/or preconditioned, pulse amplitude, and/or observed counts for a predetermined setting of the threshold or thresholds) may be determined in response to the known photon energy. This may be repeated for different energies (e.g. using different edge filters) to characterize this relation in more detail. The calibration relating photon energy and ASIC pixel output can be used to adjust the threshold setting, e.g. a table of thresholds for the image pixel's threshold detector 42 comparators, and/or to correct data obtained from the detector to homogenize the response (e.g. a pixel-by-pixel output correction map).

In the absence of incident radiation, e.g. the tube being turned off, and with the pulser circuit switched to function as the alternative input signal source for the image pixel, the pulser circuit can be tuned to obtain the same pixel output. Thus, a setting of the pulser is obtained that simulates the reference input, i.e. reference photon energy, accurately. This may include the tuning of a supply voltage to charge the capacitor of the pulser circuit, and/or the optimization of the charging time (e.g. shortening the time over which the capacitor is charged before release of the charge generally results in a lower charge buildup, e.g. by adjusting the frequency of the pulse cycle). When differences between pulser circuits across the ASIC chip, e.g. differences in capacitance values, can be assumed to be negligible (as would be, generally, an acceptable assumption), the same setting for the pulser can be applied to the dummy pixel to simulate the same incident photon event for the reference energy. If the image pixel and the dummy pixel can be controlled to receive input from the same pulser circuit, e.g. by using a controllable signal routing, e.g. signal routing switches, such that any variation between capacitance in the image pixel and the dummy pixel can be excluded.

The pulser circuit may also comprise a current meter to measure the test pulse injected into the signal processing chain to enable calibration. By measuring the injected current (or the integrated value thereof, i.e. the injected charge) directly, calibration of the pulser circuit to simulate a specific reference energy, and/or validation of the generated current pulse, may be performed in a straightforward manner, e.g. regardless of uncertainty on the produced current (e.g. by uncertainty on the capacitance value) and/or instability (e.g. fluctuation of the produced current, e.g. when using a chopped current source).

Advantageously, the dummy pixels can be used for more accurately determining (a) threshold value(s) for charge packets corresponding to a predetermined energy, e.g. 75 keV (without limitation thereto), and/or for performing input pulse sweeps for a predetermined threshold (e.g. fixed threshold *fT*), e.g. 75 keV (without limitation thereto).

The further signal processing in the image chain, e.g. implemented by the processor, may thus comprise receiving the extracted pulse amplitude and/or counting information (e.g. as function of time, e.g. as a timeseries or time-varying signal), and the processing of said information so as to, e.g., correct the information received from the image pixels, e.g. perform a correction of observed counts (CoC). For example, the raw image information provided by the ASIC may be corrected by taking the dummy pixel information into account, e.g. in conjunction with a conversion factor between the amplitude and the observed counts (OC), e.g. at a photon energy of 75keV.

For example, a conversion factor may be empirically determined, e.g. from measurements of an integral spectrum, and/or by simulations of the detector design, to convert a detected amplitude and/or threshold change (discussed hereinbelow) to a relative change in observed counts (OC) to apply to the image pixel counts. Thus, pulse amplitude information may be used to determine a change in observed counts by applying the conversion factor. While reference is made to a conversion factor, it will be understood that, if simulations or experiments show a substantial deviation from a perfectly linear behavior, the relationship between an observed change in amplitude and the corresponding observed photon counts (OC) may also be expressed (as empirically determined or simulated) by a more complete description of the conversion function, e.g. a higher-order polynomial, interpolation in a look-up table of values, and/or any other suitable way of representing a functional relationship. Nonetheless, in view of being a relationship between relative quantities (changes in amplitude and OC) and assuming a relatively limited range of these changes in practical use, it can be assumed that the conversion is substantially linear (proportional).

For example, for the example of a 75 keV test energy, the relative change in observed counts may be about 6 to 7 times larger than the observed relative amplitude change, e.g. the conversion factor may be in the range of 4 to 7, e.g. in the range of 5 to 8, e.g. in the range of 6 to 7, for a typical PhC detector design (e.g. a CZT photon-counting spectral detector for use in CT), without limitation to these examples. The conversion factor (or function) may generally be dependent of the photon energy (and/or spectrum). It is noted that the pulser circuit can be controlled so as to obtain the reference test energy accurately, i.e. simulate the reference photon energy with good fidelity, wherein the reference test energy is not sensitive, or has negligible sensitivity, to time-varying effects, e.g. flicker noise in components of the pulser circuit itself. The counts observed by image pixels will, however, be typically generated in response to a polychromatic spectrum, such that a conversion function may need to be taken into account.

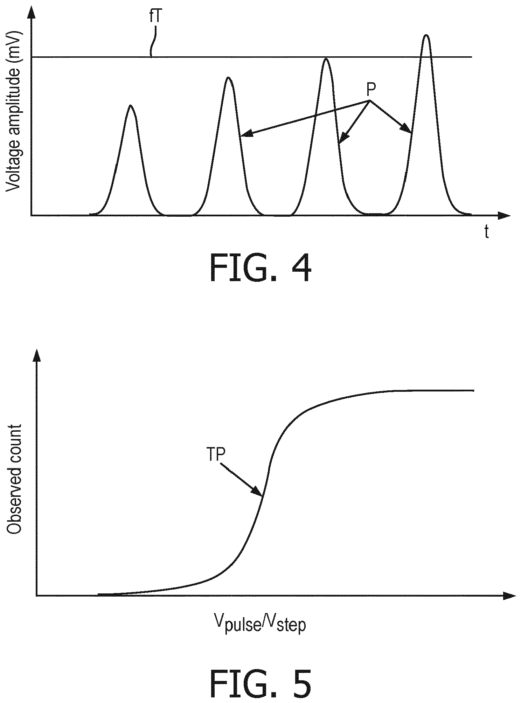

In the illustrative example shown in FIG. 4, An input pulse sweep (ipS) is shown in which the pulsed signal provided by the pulser circuit varies in amplitude across different pulses P in the pulse train, e.g. is stepwise increased (or decreased; without limitation to monotonous and/or to constant-step changes in amplitude). An illustrative fixed threshold *fT* is shown in this example. At low pulse amplitudes, the peak of the pulse is insufficient to exceed this fixed threshold level, such that the number of counted pulses (observed events), in accordance with the threshold setting, remains at zero.

However, when the nominal pulse amplitude is lower than the threshold, but the amplitude of Gaussian noise is sufficient to, additively, exceed the threshold, a non-zero number of events will be recorded, and when the input pulse amplitude *as such* exceeds the threshold level, the number of observed events will correspond to the measurement period T_{MP} multiplied by the pulse frequency fₚᵤₗₛₑ, i.e. OC = T_{MP} · fₚᵤₗₛₑ, i.e. the response will saturate to a theoretical maximum.

This simple example shows that the observed counts, observed by the dummy pixel in response to the test pulses, as function of the test pulse amplitude (e.g. the input pulse amplitude expressed by Vₚᵤₗₛₑ in multiples of the applied voltage step Vₛₜₑₚ), for a fixed threshold setting, will have the shape (e.g. disregarding x and/or y scaling and/or offsets) of the Gauss error function (*erf*), e.g. of a complementary error function mirrored along the y-axis, as illustrated in FIG. 5, when it is assumed that the noise is Gaussian or can be sufficiently approximated thereby (which is a reasonable assumption in the present context). The turning point TP, e.g. a crossover point or point of inflection (e.g. where the second derivative changes sign, and/or where the curve changes from concave to convex or vice versa), can be easily determined from analysis of the observed counts as function of pulse amplitude (or, as function of time, when the amplitude is monotonously increased or decreased in the sweep). For example, this point, or a sufficient approximation thereof, may be detected when the observed count value reaches half of the theoretical saturation value (maximum count expected based on the number of pulses generated per timeframe). The x-coordinate in this representation, i.e. the pulse amplitude corresponding to the turning point, can be considered to be a measure of the true pulse amplitude in the absence of noise. The dummy pixel's circuit may be adapted to determine this turning point and output the value (amplitude of the input pulse generated by the pulser circuit where the TP is located) to the Image Chain, and/or the processor in the Image Chain may be adapted to determine this turning point based on a raw signal output of the dummy pixel, e.g. by receiving a count of events that exceed the fixed threshold for each pulse amplitude setting for pulses generated by the pulser).

When flicker noise affects the ASIC it causes amplitude changes over time. The pulse sweep approach allows to detect such amplitude change, such that the threshold level can be reset to the detected TP amplitude.

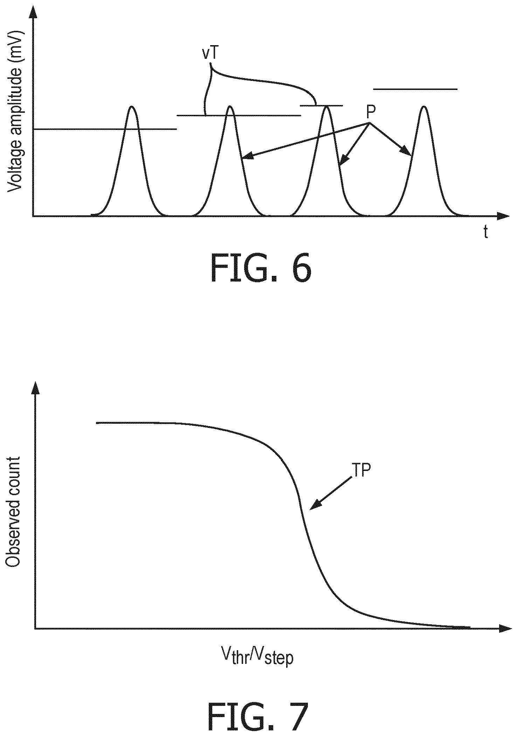

In an alternative approach, the pulse amplitude of pulses generated by the pulser circuit may be kept constant, and the threshold setting may be adjusted for different pulses of the pulse train. Thus, a threshold scan can be performed. In this case, as illustrated in FIG. 6, current pulses P of fixed amplitude are injected into the dummy pixel(s), while the threshold level *vT* (varying threshold) is swept over a range, e.g. using a trimming setting of (the threshold detector of) the dummy pixel. At a small threshold level, all injected pulses are recorded, and the number of observed counts should equal T_{MP} · fₚᵤₗₛₑ. As soon as the selected threshold level reaches the nominal pulse amplitude, the OC diminishes, due to noise, and, when the threshold level is above the pulse amplitude plus the maximum noise amplitude (stochastically speaking, a substantial number of noise standard deviations above the pulse amplitude), the number of observed counts falls to substantially zero. The resulting waveform, cf. FIG. 7, of observed counts OC as a function of the threshold level follows the shape of a complementary Gauss error function (*erfc*), when assuming Gaussian noise, and, again, the x-coordinate of the turning point (TP) identifies the threshold level corresponding to the nominal pulse amplitude without noise, which can be reported to (and/or determined by) the Image Chain. Any amplitude changes over time, caused by flicker noise, can thus be observed and corrected for.

The device can repeatedly perform measurements to monitor flicker-noise-induced changes in the device's outputs over time. For example, the scan or sweep approach discussed hereinabove (cf. FIG. 4 & 6) may be repeatedly performed during use of the device, and the turning point may be repeatedly determined to monitor changes caused by noise over time. The collected estimates of the TP may also be time-averaged to remove high frequency changes, e.g. to avoid or reduce sensitivity to transient changes in flicker noise and/or measurement noise and/or increase robustness of the approach, e.g. by averaging over (for example, without limitation thereto) 100 views. If the (x-coordinate of the) turning point changes over time, the processor (i.e. Image Chain) may adjust observed counts (OC) relating to image content (e.g. acquired raw image pixel counts), based on this detected change in amplitude in the dummy pixel(s). Based on the variation of pulse amplitude over time, the image chain can adjust the OC in each frame using a known conversion factor between e.g. the pulse amplitude shift for a 75keV simulated (mono-energetic) photon and the resulting OC shift (for a practical, typically polychromatic, spectrum used in imaging) to correct for flicker noise effects.

For example, as discussed hereinabove, the test pulses may reach the turning point for a DAC value (controlling the pulser circuit) as detected, which corresponds to a specific observed count value (known correspondence, e.g. as determined by calibration/simulation for the predetermined target photon energy, e.g. 75 keV). The observed counts (image pixel data) in each image frame may thus be adjusted based on this OC value corresponding to the amplitude shift detected. The DAC value of the turning point may be reported to the image chain as a measure for the observed pulse amplitude, e.g. every 100^{th} frame (without limitation thereto), to monitor changes in the pulse amplitude over time, from which the corresponding OC shift to apply can be determined to correct the image data. The collected TP data may also be time-averaged to remove high frequency changes, e.g. to increase robustness of the approach, e.g. by averaging over (for example, without limitation thereto) 100 pulses. Based on the variation of pulse amplitude over time, the image chain can adjust observed count values (of image pixels) accordingly, e.g. subtracting the estimated noise-related counts from the observed values as estimated from the monitored dummy pixel's output.

Advantageously, the threshold scan and/or pulse amplitude sweep may be performed during the acquisition of image data, since the dummy pixel will not be affected by the X-ray photons.

The device may also repeatedly perform measurements to monitor flicker-noise-induced changes in the device's outputs over time by setting the threshold(s) of the dummy pixels to the level detected in accordance with the approach discussed hereinabove, e.g. to the turning point (TP) of a threshold scan for a fixed input test pulse amplitude. Observed count values, of the dummy pixel(s) at this threshold setting, in response to at least one input test pulse, e.g. of the same amplitude as used to determine the threshold via the TP of the response curve (threshold scan), may be collected during use of the device, e.g. shortly before, shortly after or during the acquisition of an image. If the observed count is substantially higher or lower than the expected value, e.g. such that the dummy pixel's measurement corresponds to a point shifted right & down or left & up along the illustrative curve in FIG. 7), it can be presumed that the flicker noise level has changed relative to the situation when the threshold was initially determined, e.g. by the threshold scan discussed hereinabove. Therefore, the image pixel data, collected simultaneously or approximately around the same point in time, can be corrected accordingly, e.g. the OC value obtained from the dummy pixel(s) may be used in the Image Chain, e.g. before/during the image reconstruction process, for a correction of counts (CoC) of the reported (image pixel) counts.

The device may also repeatedly perform measurements of the observed counts (OC) with a fixed threshold (fT), using a constant pulse amplitude of generated test pulses that is determined by, e.g. corresponds to, the turning point (TP) determined by the input pulse sequence (ipS) discussed hereinabove (e.g. cf. FIG. 4 and FIG. 5). If the observed count is substantially higher or lower (e.g. detected by applying a predetermined threshold to the difference) than the expected value, the present measurement corresponds to a point shifted to the right & up or to the left & down (depending on the sign of the difference) along the illustrative curve in FIG. 5. Thus, such substantial change may indicate that the flicker noise level has changed relative to the initial conditions when the pulse amplitude was determined from the turning point of the ipS. This therefore also allows changes over time to be monitored. The correction of counts (CoC) applied to the image pixel data can thus be adjusted to compensate for such detected change, and/or a new, more comprehensive, test to determine the flicker noise level accurately (e.g. by a fT and/or ipS method as discussed hereinabove) may be triggered.

While a single dummy pixel may be used to estimate the flicker noise, it will be understood that using a plurality of dummy pixels allows a more accurate determination of the flicker noise, e.g. by averaging the results obtained from different dummy pixels (and/or basing an estimate on averaged outputs from different dummy pixels). This allows a low-frequency drift common to all pixels on the ASIC to be identified, particularly a drift that affects the dummy pixels collectively, and by extension, can be assumed to influence the image pixels as well.

Flicker noise shows a low-frequency drift that affects all pixels of the same ASIC, and this common drift typically results in image artefacts (e.g. in CT reconstructions). Nonetheless, (uncorrelated) single pixel flicker noise may also be present, e.g. which would typically result in artefacts of a different type. Autozero compensation approaches are known in the art that can compensate, at least to some extent, for the latter. Furthermore, flicker-noise-optimized CMOS designs are known in the art to reduce the impact of flicker noise, e.g. which may use MOSFETs that are larger than would be typical. Since individual pixel fluctuations can be reduced by known methods, if needed, e.g. the aforementioned autozero compensation and/or design optimizations, a few dummy pixels may suffice to obtain sufficient data to characterize a correlated low-frequency drift, e.g. such that any local deviations in response of the dummy pixels can be averaged out. By averaging the acquired data over at least a few dummy pixels, e.g. at least 2, at least 4, at least 8 or at least 16, the uncorrelated dummy pixel's (low-frequency) noise can be effectively suppressed. High-frequency noise can also be eliminated (or sufficiently reduced) by averaging over time, e.g. a sufficiently large number of views (time samples), such that the observed counts and/or amplitudes of the dummy pixels can be robustly and efficiently determined, and image pixel signals can be corrected accordingly with good accuracy.

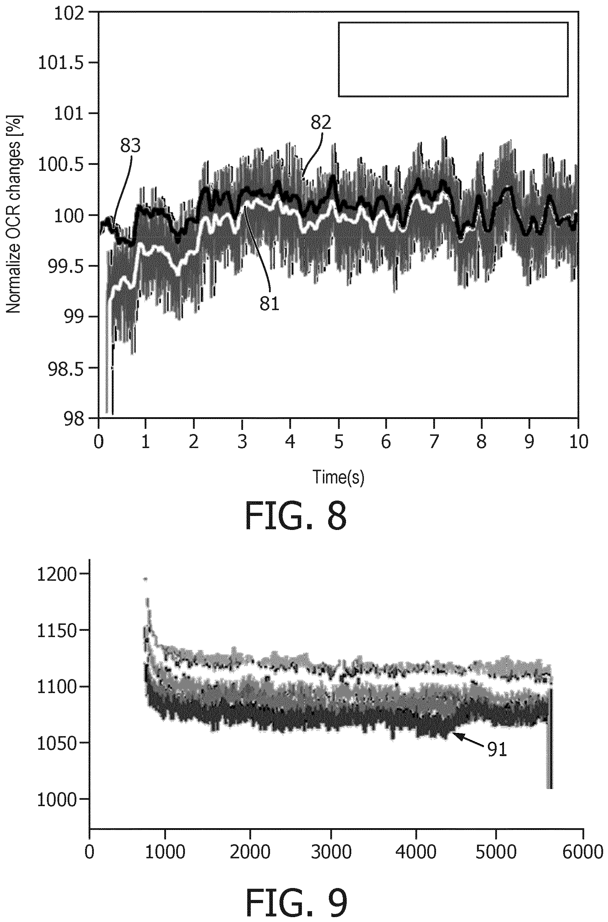

Referring to FIG. 8, illustrative results are shown of an approach as discussed hereinabove, in which the OC value is measured at a fixed threshold. At the time 0.2 s, the X-ray shutter is opened, as can be observed from the sudden surge of reported OC values 82 (grey) by the image pixels (averaged over a number of pixels), i.e. the ASIC's image pixels measure the responses to the incident radiation, at a fixed threshold of 75 keV. The low-frequency fluctuations of the measured X-ray count signal are obtained by smoothing, and shown in overlay curve 81 (white) over the raw measurements. A number of dummy pixels, in this example 22 pixels (here, an entire single row), are not used for conversion of X-ray photons (in this example, by being blocked from X-ray photons by a lead filter). These dummy pixels collect, in parallel with the image acquisition, OC values at a fixed threshold setting, in which electrical test pulses are supplied corresponding to 75 keV. The fixed threshold for the dummy pixels was set to the turning point of a threshold scan (performed previous to the illustrated test results), as discussed hereinabove (for the same amplitude of 75 keV test pulses). The smoothed results of the average OC across the dummy pixels is shown as the graph 83 (dark black). Obviously, this dummy pixel signal does not depend on the X-ray beam, and therefore was also present when the shutter was still closed (time before 0.2 s). As can be observed clearly, the dummy pixel output 83 and the smoothed image pixel output 81 show very similar fluctuations. Since the pulser reference results (observed by the dummy pixels) are not affected by non-idealities of the CZT sensor, these fluctuations must originate from the electronics, i.e. the readout circuitry. Therefore, this pulser reference can be used to correct for the fluctuations in the X-ray signal, e.g. image pixel signals used for image reconstruction.

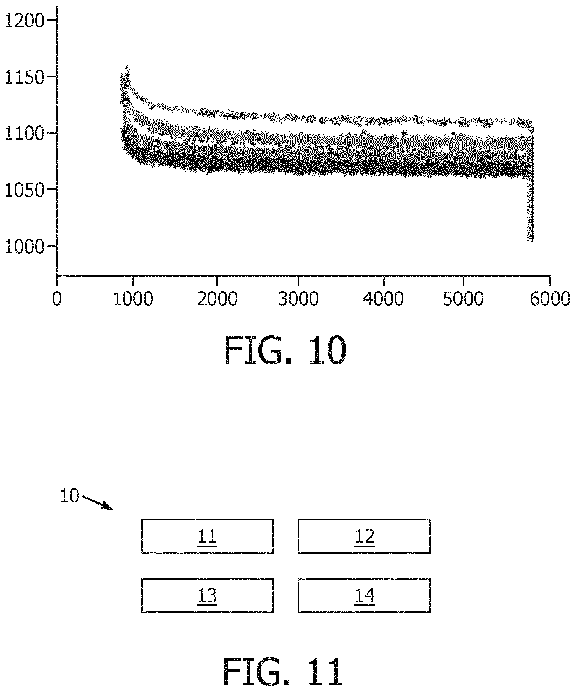

The result of such a correction is shown in FIG. 9. In this example, the shutter is opened at the sample time index 800 (a.u.). The averaged signal of a set of X-ray pixels (e.g. 300, in this example) is shown before correction using the continually monitored OC at-fixed-threshold output of the set of dummy pixels, for several different acquisitions taken successively. Each greyscale value represents a different image acquisition in this series. Referring to FIG. 10, which shows the results for the same set of pixels (for respectively the different acquisitions) after applying a correction based on the observed OC values of the dummy pixels. As can be seen, this correction significantly smoothens the measured X-ray count traces. For example, in FIG. 9, a noticeable excursion can be seen around time index 4500 for one of the acquisitions, as indicated by the arrow 91, which was effectively corrected by applying this method (cf. absence thereof in FIG. 10).

These illustrative results also demonstrate that operating the ASIC, in accordance with embodiments of the invention, such that a plurality of pixels receive electrical test pulses does not cause any substantial (noticeable) disturbance. The improved stability of the corrected counts clearly outweighs any potential disturbance (e.g. interference) that would be caused by the use of the pulser circuit, in the dummy pixels, e.g. due to sufficient isolation between pixels on the same chip.

Referring to FIG. 11, in a fourth aspect, the present invention relates to a method 10 for characterizing, reducing, and/or correcting for, flicker noise in a photon-counting image detector, e.g. in accordance with embodiments of the second aspect of the present invention, e.g. by a device in accordance with embodiments of the first aspect of the present invention.

The method comprises generating 11 a plurality of electrical test pulses, e.g. using a pulse generation circuit, and providing said electrical test pulses to at least one dummy pixel of an application-specific integrated circuit of the photon-counting image detector.

The method comprises obtaining 12 via a connection to the photon counting detector array module electrical charge packets and providing the electrical charge packets in the form of an electrical input signal to image pixel circuits of the application-specific integrated circuit.

The method comprises processing 13 a dummy pixel output signal (or the signals of a plurality of dummy pixels) that is (are) generated by the dummy pixel based on the electrical test pulses by comparing the electrical input pulses, or signals derived therefrom, against at least one threshold value.

The method comprises processing 14 an image pixel output signal that is generated by the image pixels based on the electrical charge packets by comparing the electrical charge packets, or signals derived therefrom, against at least one threshold value.

In a method in accordance with embodiments, the electrical test pulses may be generated by a chopped current source, and/or by charging (and subsequently discharging) a capacitor having a predetermined capacitance, e.g. charging by a switched voltage source.

Notwithstanding the exemplary embodiments described hereinbelow, is the present invention only limited by the attached claims.

The word "comprise," as used in the claims, is not limited to the features, elements or steps as described thereafter, and does not exclude additional features, elements or steps. This therefore specifies the presence of the mentioned features without excluding a further presence or addition of one or more features.

## Claims

1. A device (20) for use in photon counting imaging, the device comprising:
- an application-specific integrated circuit (32) comprising:
- a plurality of image pixel circuits (35) for operably connecting (38) to respective detector pixels (34) of a photon counting detector array module (30), and
- at least one dummy pixel circuit (36),
**characterized in that** the device further comprises:
- at least one pulse generation circuit (39), connected to the at least one dummy pixel circuit, for generating a plurality of electrical test pulses,
- a processor (50) adapted for analyzing an output signal of the at least one dummy pixel circuit (36), the output signal generated in response to said plurality of electrical test pulses, so as to determine a measure indicative of a drift, change and/or deviation of at least one parameter characteristic of at least one of the operation of the application-specific integrated circuit (32) and of the detector array module (30), in order to process and correct outputs of said image pixels circuits (35) and/or to adjust a setting of the circuit (32) by taking said measure into account.

2. The device of claim 1, wherein each image pixel circuit of said plurality of image pixel circuits is adapted to compare electrical input pulses from the respective detector pixels, or signals derived therefrom, against at least one threshold value, and wherein the at least one dummy pixel circuit is adapted to compare the plurality of electrical test pulses, or signals derived therefrom, against at least one threshold value,
wherein said processor (50) is adapted to analyze said output of the at least one dummy pixel circuit (36), generated in response to said plurality of electrical test pulses, as function of the pulse amplitude of the electrical test pulses and/or as function of a setting of the at least one threshold value of the dummy pixel circuit, so as to determine said measure to quantify a discrepancy between the at least one threshold value and the corresponding test pulse amplitude, and
wherein said processor (50) is adapted to process and correct outputs of said image pixel circuits (35) and/or to adjust a setting of the at least one threshold value of the image pixel circuits by taking the measure quantifying said discrepancy into account.

3. The device of claim 2, wherein said pulse generation circuit (39) is adapted to generate said electrical test pulses as an amplitude sweep sequence of electrical test pulses covering a plurality of different pulse amplitudes, and said processor (50) is adapted to analyze said output of the at least one dummy pixel circuit (36), generated in response to said amplitude sweep sequence and with a constant value of the at least one threshold, as function of the plurality of different pulse amplitudes.

4. The device of claim 2 or claim 3, wherein said pulse generation circuit (39) is adapted to generate said electrical test pulses as a fixed amplitude sequence of electrical test pulses having an identical amplitude that corresponds to a predetermined photon energy, and wherein said processor (50) is adapted to analyze said output of the at least one dummy pixel circuit (36), generated in response to said fixed amplitude sequence while varying a value of the at least one threshold over a plurality of different threshold evaluation values, as function of the plurality of different threshold values.

5. The device of claim 3 or claim 4, wherein said processor (50) is adapted to determine said measure to quantify said discrepancy by determining the pulse amplitude and/or the threshold value that corresponds to a turning point (TP) between a low state of the output corresponding to substantially zero pulses exceeding the threshold and a high state corresponding to substantially all pulses exceeding the threshold.

6. The device of claim 5, wherein said processor (50) is adapted to correct output signals, comprising observed count values, of said image pixels circuits (35) by taking the pulse amplitude and/or the threshold value that corresponds to said turning point (TP) into account, in which at least one conversion factor is applied that relates a change of the pulse amplitude and/or threshold value of the turning point to a corresponding change of the observed count values, to obtain said correction, for a reference integral X-ray spectrum.

7. The device of claim 5, wherein said processor (50) is adapted:
to determine the threshold value that corresponds to a turning point (TP) between a low state of the output corresponding to substantially zero pulses exceeding the threshold and a high state corresponding to substantially all pulses exceeding the threshold,
to control the at least one dummy pixel circuit so as to set the at least one threshold value of the at least one dummy pixel circuit to said determined threshold value that corresponds to said turning point, and
to monitor subsequent changes of the output of the at least one dummy pixel circuit, in response to further electrical test pulses of said amplitude that corresponds to said predetermined photon energy, wherein said subsequent changes are representative of said measure of discrepancy for correcting said outputs of the image pixel circuits (35).

8. The device of any of the previous claims, wherein said processor (50) is adapted to repeatedly analyze said output of the at least one dummy pixel circuit and determine said measure to quantify said drift, change and/or deviation so as to monitor an evolution of said at least one parameter over time.

9. The device of any of the previous claims, wherein said pulse generation circuit (39) comprises a chopped current source to generate said plurality of electrical test pulses, and/or a capacitor, having a predetermined capacitance, connected to a switched voltage source.

10. The device of any of the claims 2-9, wherein said pulse generation circuit (39) is adapted to connect, via a controllable switch and/or controllable signal router network, to at least one of the image pixel circuits (35), so as to route, in a first switch setting, the electrical test pulses generated by the pulser circuit to said image pixel circuit as said electrical input pulse for the purpose of energy calibration, and to route, in a second switch setting, the electrical input pulses from the detector pixel to said image pixel circuit for the purpose of image acquisition.

11. The device of any of the previous claims, comprising a substantially identical, dedicated, pulse generation circuit for each dummy pixel circuit and for each image pixel circuit, in which the dedicated pulser circuit is adapted to provide said electrical test pulses exclusively to the corresponding dummy pixel circuit and/or image pixel circuit.

12. A photon-counting image detector (110) comprising the device (20) in accordance with any of the previous claims.

13. A diagnostic imaging system (100) comprising the photon-counting image detector in accordance with the previous claim.

14. A method (10) for characterizing, reducing, and/or correcting for a drift, change and/or deviation of at least one parameter characteristic of at least one of the operation of the application-specific integrated circuit (32) and of the detector array module (30), in a photon-counting image detector, the method comprising:
generating (11) a plurality of electrical test pulses and providing said electrical test pulses to at least one dummy pixel circuit of an application-specific integrated circuit of the photon-counting image detector, wherein said at least one dummy pixel circuit generates an output signal based on the electrical test pulses,
providing (12) electrical input pulses originating from respective detector pixels to respective image pixel circuits of said application-specific integrated circuit,
analyzing (13) the at least one dummy pixel circuit output signal, generated in response to said plurality of electrical test pulses, so as to determine a measure indicating a drift, change and/or deviation of at least one parameter, and
correcting (14) said image pixel circuit output signals, and/or adjusting a setting of the application-specific integrated circuit, by taking said measure into account.

15. A computer program product for performing the method of claim 14 when executed by a processor.
